# FASCICULE DE BREVET EUROPEEN

(11) **EP 3 154 908 B1**
(45) Date de publication et mention de la délivrance du brevet: **08.01.2020**
(21) Numéro de dépôt: 15727663.5
(22) Date de dépôt: 09.06.2015
(51) Int. Cl.: C01F 7/34, C01F 7/14

(54) **PROCEDE DE PREPARATION DE GEL HAUTE DISPERSIBILITE**
VERFAHREN ZUR HERSTELLUNG VON GEL MIT HOHER DISPERGIERBARKEIT
METHOD FOR PREPARING GEL WITH HIGH DISPERSIBILITY

(30) Priorité: 13.06.2014 FR 1455421
(43) Date de publication de la demande: 19.04.2017
(73) Titulaire: IFP Energies nouvelles, 92500 Rueil-Malmaison (FR)
(72) Inventeur: BOUALLEG, Malika, 69100 Villeurbanne (FR); BOUVRY, Céline, 92500 Rueil-Malmaison (FR); EUZEN, Patrick, F-75001 Paris (FR)
(74) Mandataire: IFP Energies nouvelles
(86) Numéro de dépôt international: PCT/EP2015/062829
(87) Numéro de publication internationale: WO 2015/189203

(56) Documents cités:
- EP-A2- 0 147 167
- GB-A- 2 123 804
- US-B1- 6 713 428
- US-B2- 7 790 652

## Description

### Domaine technique

La présente invention se rapporte à la préparation de gels d'alumine présentant une haute dispersibilité.

### Art antérieur

Plusieurs protocoles opératoires connus dans l'art antérieur conduisent à des gels d'alumine dispersibles. Plusieurs brevets décrivent notamment un procédé de préparation dit "sol-gel". Le brevet US 4 676 928 décrit un procédé de production d'une alumine dispersible dans l'eau comprenant une étape de formation d'une dispersion aqueuse d'alumine, une étape d'ajout d'un acide pour produire une dispersion acide ayant un pH compris entre 5 et 9, une étape de maturation à une température élevée supérieure à 70°C pendant une durée suffisante pour transformer l'alumine en gel colloïdal, puis une étape de séchage dudit gel colloïdal obtenu.

Le brevet US 5 178 849 décrit également un procédé de production d'une alumine alpha comprenant une étape de dispersion d'un hydrate d'aluminium ayant une dispersibilité inférieure à 70%, une étape d'acidification de la dispersion obtenue à un pH inférieur à 3,5 pour dissoudre au moins partiellement l'hydrate d'aluminium, une étape de traitement hydrothermal de la dispersion acide obtenue à une température comprise entre 150 et 200°C, une pression comprise entre 5 et 20 atm pendant une durée comprise entre 0,15 et 4 heures pour obtenir une boehmite colloïdale présentant une dispersibilité supérieure à 90%.

La préparation de gel d'alumine par précipitation est également bien connue dans l'art antérieur.

En particulier, le brevet US 7 790 652 décrit la préparation par précipitation d'un support alumine présentant une distribution poreuse bien spécifique, pouvant être utilisé comme support de catalyseur dans un procédé d'hydroconversion de charges hydrocarbonées lourdes.

Le support alumine est préparé selon une méthode comprenant une première étape de formation d'une dispersion d'alumine par le mélange, de manière contrôlée, d'une première solution aqueuse alcaline et d'une première solution aqueuse acide, au moins une desdites solutions acide et basiques, ou les deux comprenant un composé aluminique. Les solutions acide et basique sont mélangées dans des proportions telles que le pH de la dispersion résultante est compris entre 8 et 11. Les solutions acide et basique sont également mélangées dans des quantités permettant d'obtenir une dispersion contenant la quantité désirée d'alumine, en particulier, la première étape permet l'obtention de 25 à 35% poids d'alumine par rapport à la quantité totale d'alumine formée à l'issue des deux étapes de précipitation. La première étape opère à une température comprise entre 20 et 40°C. Quand la quantité d'alumine désirée est formée, la température de la suspension est augmentée à une température comprise entre 45 et 70°C, puis la suspension chauffée est ensuite soumise à une deuxième étape de précipitation par mise en contact de ladite suspension avec une seconde solution aqueuse alcaline et une seconde solution aqueuse acide, au moins l'une des deux solutions ou les deux comprenant un composé aluminique. De même, le pH est réglé entre 8 et 10,5 par les proportions des solutions acide et basique ajoutées et la quantité restante d'alumine à former dans la deuxième étape est apportée par les quantités des deuxièmes solutions acide et basique ajoutées. La deuxième étape opère à une température comprise entre 20 et 40°C. Le gel d'alumine ainsi formé comprend au moins 95% de boehmite. La dispersibilité du gel d'alumine ainsi obtenu n'est pas mentionnée. Le gel d'alumine est ensuite filtré, lavé et éventuellement séché selon les méthodes connues de l'homme du métier, sans étape de murissement préalable, pour produire une poudre d'alumine qui est ensuite mise en forme selon les méthodes connues de l'homme du métier, puis calciné pour produire le support alumine final.

La première étape de précipitation du procédé de préparation du brevet US 7 790 652 est limitée à une production d'alumine faible, comprise entre 25 et 35% poids, car une production d'alumine plus élevée à l'issue de la première étape ne permet pas une filtration optimale du gel obtenu. Par ailleurs, l'augmentation de la production d'alumine dans la première étape du brevet US 7 790 652 ne permettrait pas la mise en forme du gel ainsi obtenu.

La présente invention propose de palier les inconvénients du procédé de préparation selon le brevet US 7 790 652.

La demanderesse a ainsi découvert un nouveau procédé de préparation par précipitation d'un gel d'alumine selon la revendication 1.

Par ailleurs, le nouveau procédé de préparation selon l'invention est caractérisé par la présence d'une étape de traitement thermique finale et en particulier une étape de mûrissement finale permettant l'obtention d'un gel d'alumine présentant une filtrabilité améliorée, permettant une meilleure productivité du procédé selon l'invention ainsi qu'une extrapolation du procédé au niveau industriel plus aisée. Ledit procédé selon l'invention permet également l'obtention d'un gel d'alumine présentant un meilleur indice de dispersibilité par rapport aux gels d'alumine de l'art antérieur, facilitant ainsi sa mise en forme selon les techniques connues de l'homme du métier.

Un objectif de la présente invention est de fournir un nouveau procédé de préparation dudit gel d'alumine par précipitation, en milieu réactionnel aqueux, d'au moins un précurseur basique et d'au moins un précurseur acide, au moins l'un des précurseurs basique ou acide ou les deux comprenant de l'aluminium, dans des proportions relatives et dans des quantités bien spécifiques et permettant l'obtention d'un gel d'alumine présentant un indice de dispersibilité élevé, et en particulier un indice de dispersibilité supérieur à 70%, de préférence compris entre 70 et 100%, de manière préférée compris entre 80 et 100%, de manière très préférée compris entre 85 et 100% et de manière encore plus préférée entre 90 et 100%.

### Résumé et intérêt de l'invention

La présente invention a pour objet la préparation d'un gel d'alumine présentant un indice de dispersibilité élevé, et en particulier un indice de dispersibilité supérieur à 70%, une taille de cristallite comprise entre 1 à 35 nm, ainsi qu'une teneur en soufre comprise entre 0,001% et 2% poids et une teneur en sodium comprise entre 0,001% et 2 % poids, les pourcentages poids étant exprimés par rapport à la masse totale de gel d'alumine.

Un avantage de l'invention est de fournir un nouveau gel d'alumine présentant une dispersibilité très élevée par rapport aux gels d'alumine de l'art antérieur.

Un gel d'alumine caractérisé par un indice de dispersibilité élevée sera plus facilement mis en forme selon toutes les techniques de mise en forme connues de l'homme du métier telles que par exemple par malaxage-extrusion, par granulation ou par la technique de l'oil drop, qu'un gel présentant un indice de dispersibilité faible.

En particulier, la présente invention a pour objet un procédé de préparation d'un gel d'alumine ayant un indice de dispersibilité supérieur à 70%, l'indice de dispersibilité étant défini comme le pourcentage en poids de gel d'alumine peptisée que l'on peut disperser par centrifugation dans un tube en polypropylène à 3600G pendant 10 min, la dispersibilité étant mesurée en dispersant 10% de boehmite ou gel d'alumine dans une suspension d'eau contenant également 10% d'acide nitrique par rapport à la masse de boehmite, puis on centrifuge la suspension à 3600G rpm pendant 10 min, les sédiments recueillis sont séchés à 100°C une nuit, puis pesés, on obtient l'indice de dispersibilité, noté ID par le calcul suivant : ID(%)=100%-masse de sédiments séchés(%), une taille de cristallite comprise entre 1 à 35 nm, ainsi qu'une teneur en soufre comprise entre 0,001% et 2% poids et une teneur en sodium comprise entre 0,001% et 2 % poids, les pourcentages poids étant exprimés par rapport à la masse totale de gel d'alumine, ledit procédé comprenant au moins les étapes suivantes :
a) au moins une première étape de précipitation d'alumine, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de ladite première étape compris entre 45 et 90 %, le taux d'avancement étant défini comme étant la proportion d'alumine formée en équivalent Al₂O₃ lors de ladite première étape de précipitation par rapport à la quantité totale d'alumine formée à l'issue de la ou les étapes de précipitation, ladite première étape de précipitation opérant à une température comprise entre 10 et 50 °C, et pendant une durée comprise entre 2 minutes et 30 minutes, une étape de chauffage de la suspension obtenue à l'issue de l'étape a) de précipitation est mise en oeuvre entre les deux étapes de précipitation a) et a'), ladite étape de chauffage opérant à une température comprise entre 20 et 90°C et pendant une durée comprise entre 7 et 45 minutes,
a') une deuxième étape de précipitation a') de la suspension obtenue à l'issue de l'étape de chauffage, opèrée par ajout dans ladite suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 10 et 55 %, ledit taux d'avancement de la deuxième étape étant défini comme étant la proportion d'alumine formée en équivalent Al₂O₃ lors de ladite deuxième étape de précipitation a') par rapport à la quantité totale d'alumine formée à l'issue de l'étape a'), ladite deuxième étape a') opérant à une température comprise entre 40 et 90 °C, et pendant une durée comprise entre 2 minutes et 50 minutes, et une deuxième étape de chauffage de la suspension obtenue à l'issue de ladite deuxième étape de précipitation a') à une température comprise entre 50 et 95°C,
b) une étape de traitement thermique de la suspension obtenue à l'issue de l'étape a'), à une température comprise entre 50 et 200°C pendant une durée comprise entre 30 minutes et 5 heures,
c) une étape de filtration de la suspension obtenue à l'issue de l'étape b) de traitement thermique, suivie d'au moins une étape de lavage du gel obtenu.

Le procédé selon l'invention caractérisé par la combinaison d'étapes de précipitation d'alumine permettant la production d'une quantité élevée d'alumine et d'une étape de traitement thermique finale de la suspension obtenue, permet l'obtention d'un gel d'alumine présentant une filtrabilité améliorée, favorisant ainsi la productivité du procédé selon l'invention ainsi qu'une extrapolation du procédé au niveau industriel.

Un autre avantage de l'invention est de fournir un nouveau procédé de préparation par précipitation d'un gel d'alumine présentant un indice de dispersibilité élevé par rapport aux gels de l'art antérieur.

### Description de l'invention

La présente invention a pour objet la préparation d'un gel d'alumine présentant un indice de dispersibilité supérieur à 70%, une taille de cristallite comprise entre 1 à 35 nm, et une teneur en soufre mesurée par la méthode de fluorescence X, comprise entre 0,001% et 2% poids et une teneur en sodium, mesurée par ICP ou spectrométrie à plasma à couplage inductif comprise entre 0,001% et 2 % poids, les pourcentages poids étant exprimés par rapport à la masse totale de gel d'alumine.

Dans toute la suite du texte, l'indice de dispersibilité est défini comme le pourcentage en poids de gel d'alumine peptisée que l'on peut disperser par centrifugation dans un tube en polypropylène à 3600G pendant 10 min.

La dispersibilité est mesurée en dispersant 10% de boehmite ou gel d'alumine dans une suspension d'eau contenant également 10% d'acide nitrique par rapport à la masse de boehmite. Puis, on centrifuge la suspension à 3600G rpm pendant 10 min. Les sédiments recueillis sont séchés à 100°C une nuit, puis pesés.

On obtient l'indice de dispersibilité, noté ID par le calcul suivant : ID(%)=100%-masse de sédiments séchés(%).

De préférence, le gel d'alumine préparé selon l'invention présente un indice de dispersibilité compris entre 70 et 100%, de manière préférée entre 80 et 100%, de manière très préférée entre 85 et 100% et de manière encore plus préférée entre 90 et 100%.

De préférence, le gel d'alumine préparé selon l'invention présente une taille de cristallites comprise entre 2 à 35 nm.

En particulier, le gel d'alumine ou la boehmite sous forme de poudre préparé selon l'invention est composée de cristallites dont la taille, obtenue par la formule de Scherrer en diffraction des rayons X selon les directions cristallographiques (020) et (120) est respectivement comprise entre 2 et 20 nm et entre 2 et 35 nm.

De préférence, le gel d'alumine préparé selon l'invention présente une taille de cristallites selon la direction cristallographique (020) comprise entre 2 à 15 nm et une taille de cristallite selon la direction cristallographique (120) comprise entre 2 à 35 nm.

La diffraction des rayons X sur les gels d'alumine ou boehmites a été effectuée en utilisant la méthode classique des poudres au moyen d'un diffractomètre.

La formule de Scherrer est une formule utilisée en diffraction des rayons X sur des poudres ou échantillons polycristallins qui relie la largeur à mi-hauteur des pics de diffraction à la taille des cristallites. Elle est décrite en détail dans la référence : Appl. Cryst. (1978). 11, 102-113 Scherrer after sixty years: A survey and some new results in the determination of crystallite size, J. I. Langford and A. J. C. Wilson.

Conformément à l'invention, le gel de d'alumine préparé selon l'invention présente une teneur en impuretés et en particulier en soufre, mesurée par la méthode de fluorescence X, comprise entre 0,001% et 2% poids et une teneur en sodium, mesurée par ICP ou spectrométrie à plasma à couplage inductif comprise entre 0,001 et 2 % poids, les pourcentages poids étant exprimés par rapport à la masse totale de gel d'alumine.

De préférence, le gel d'alumine préparé selon l'invention comprend une teneur en soufre comprise entre 0,001 % et 1% poids, de manière préférée entre 0,001 et 0,40% poids, de manière très préférée entre 0,003 et 0,33 % poids, et de manière plus préférée entre 0,005 et 0,25 % poids.

De préférence, le gel d'alumine préparé selon l'invention comprend une teneur en sodium comprise entre 0,001 % et 1% poids, de manière préférée entre 0,001 et 0,15 % poids, de manière très préférée entre 0,0015 et 0,10% poids, et de manière encore plus préférée entre 0,002 et 0,040 % poids.

### Procédé de préparation

Conformément à l'invention, ledit procédé de préparation comprend au moins une première étape a) de précipitation d'alumine, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 45 et 90%, le taux d'avancement étant défini comme étant la proportion d'alumine formée en équivalent Al₂O₃ lors de ladite étape a) de précipitation par rapport à la quantité totale d'alumine formée à l'issue des étapes de précipitation et plus généralement à l'issue du procédé de préparation selon l'invention, ladite étape a) opérant à une température comprise entre 10 et 50 °C, et pendant une durée comprise entre 2 minutes et 30 minutes.

De manière générale, on entend par « taux d'avancement » de la n-ième étape de précipitation le pourcentage d'alumine formé en équivalent Al₂O₃ dans ladite n-ième étape, par rapport à la quantité totale d'alumine formée à l'issue de l'ensemble des étapes de précipitation et plus généralement à l'issue des étapes de préparation du gel d'alumine.

### Etape a) de précipitation

Le mélange dans le milieu réactionnel aqueux d'au moins un précurseur basique et d'au moins un précurseur acide nécessite soit, qu'au moins le précurseur basique ou le précurseur acide comprenne de l'aluminium, soit que les deux précurseurs basique et acide comprennent de l'aluminium.

Les précurseurs basiques comprenant de l'aluminium sont l'aluminate de sodium et l'aluminate de potassium. Le précurseur basique préféré est l'aluminate de sodium.

Les précurseurs acides comprenant de l'aluminium sont le sulfate d'aluminium, le chlorure d'aluminium et le nitrate d'aluminium. Le précurseur acide préféré est le sulfate d'aluminium.

De préférence, le ou les précurseur(s) basique(s) et acide(s) sont ajoutés dans ladite première étape de précipitation a) en solutions aqueuse.

De préférence, le milieu réactionnel aqueux est de l'eau.

De préférence, ladite étape a) opère sous agitation.

De préférence, ladite étape a) est réalisée en l'absence d'additif organique.

Les précurseurs acide et basique, qu'ils contiennent de l'aluminium ou pas, sont mélangées, de préférence en solution, dans le milieux réactionnel aqueux, dans des proportions telles que le pH de la suspension résultante est compris entre 8,5 et 10,5.

Conformément à l'invention, c'est le débit relatif des précurseurs acide et basique qu'ils contiennent de l'aluminium ou pas, qui est choisi de manière à obtenir un pH du milieu réactionnel compris entre 8,5 et 10,5.

Dans le cas préféré où les précurseurs basique et acide sont respectivement l'aluminate de sodium et le sulfate d'aluminium, le ratio massique dudit précurseur basique sur ledit précurseur acide est avantageusement compris entre 1,6 et 2,05.

Pour les autres précurseurs basique et acide, qu'ils contiennent de l'aluminium ou pas, les ratio massiques base/acide sont établis par une courbe de neutralisation de la base par l'acide. Une telle courbe est obtenue aisément par l'homme du métier.

De préférence, ladite étape a) de précipitation est réalisée à un pH compris entre 8,5 et 10 et de manière très préférée entre 8,7 et 9,9.

Les précurseurs acide et basique sont également mélangées dans des quantités permettant d'obtenir une suspension contenant la quantité désirée d'alumine, en fonction de la concentration finale en alumine à atteindre. En particulier, ladite étape a) permet l'obtention de 45 à 90% poids d'alumine en équivalent Al₂O₃ par rapport à la quantité totale d'alumine formée à l'issue de la ou les étapes de précipitation. Conformément à l'invention, c'est le débit du ou des précurseurs acide et basique contenant de l'aluminium qui est réglé de manière à obtenir un taux d'avancement de la première étape compris entre 45 et 90%.

De préférence, le taux d'avancement de ladite étape de précipitation a) est compris entre 50 à 85%. Le taux d'avancement est défini comme étant la proportion d'alumine formée en équivalent Al₂O₃ lors de ladite étape a) de précipitation par rapport à la quantité totale d'alumine formée à l'issue des deux étapes de précipitation du procédé de préparation selon l'invention.

Ainsi, en fonction de la concentration en alumine visée à l'issue de la ou des étapes de précipitation, de préférence comprise entre 20 et 100 g/l, les quantités d'aluminium devant être apportées par les précurseurs acide et/ou basique sont calculées et le débit des précurseurs est réglé en fonction de la concentration desdits précurseurs en aluminium ajoutés, de la quantité d'eau ajouté dans le milieu réactionnel et du taux d'avancement requis pour la ou les étapes de précipitation.

Les débit du ou des précurseurs acide et/ou basique contenant de l'aluminium dépendent de la dimension du réacteur utilisé et ainsi de la quantité d'eau ajoutée dans le milieu réactionnel.

De préférence, ladite étape a) de précipitation est réalisée à une température comprise entre 10 et 45°C, de manière préférée entre 15 et 45 °C, de manière plus préférée entre 20 et 45°C et de manière très préférée entre 20 et 40°C.

Il est important que ladite étape a) de précipitation opère à basse température. Dans le cas où ledit procédé de préparation selon l'invention comprend deux étapes de précipitation, l'étape a) de précipitation est avantageusement réalisée à une température inférieure à la température de la deuxième étape de précipitation.

De préférence, ladite étape a) de précipitation est réalisée pendant une durée comprise entre 5 et 20 minutes, et de manière préférée de 5 à 15 minutes.

Conformément à l'invention, une étape de chauffage de la suspension obtenue à l'issue de l'étape a) de précipitation est mise en oeuvre entre les deux étapes de précipitation a) et a'), ladite étape de chauffage opèrant à une température comprise entre 20 et 90°C, de préférence entre 30 et 80°C, de manière préférée entre 30 et 70°C et de manière très préférée entre 40 et 65°C et pendant une durée comprise entre 7 et 45 minutes et de préférence entre 7 et 35 minutes.

Ladite étape de chauffage est avantageusement mise en oeuvre selon toutes les méthodes de chauffage connues de l'homme du métier.

Conformément à l'invention, ledit procédé de préparation comprend une deuxième étape de précipitation a') après la première étape de précipitation.

Ladite deuxième étape de précipitation permet d'augmenter la proportion d'alumine produite. Ladite deuxième étape de précipitation a') est mise en oeuvre entre ladite première étape de précipitation a) et l'étape b) de traitement thermique.

Conformément à l'invention, ledit procédé de préparation comprend une deuxième étape de précipitation de la suspension obtenue à l'issue de l'étape de chauffage, ladite deuxième étape opérant par ajout dans ladite suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 10 et 55%, ledit taux d'avancement étant défini comme étant la proportion d'alumine formée en équivalent Al₂O₃ lors de ladite deuxième étape de précipitation par rapport à la quantité totale d'alumine formée à l'issue des deux étapes de précipitation et de préférence à l'issue de l'étape a') du procédé selon l'invention, ladite étape opérant à une température comprise entre 40 et 90 °C, et pendant une durée comprise entre 2 minutes et 50 minutes.

De même que dans la première étape de précipitation a), l'ajout dans la suspension chauffée, d'au moins un précurseur basique et d'au moins un précurseur acide nécessite soit, qu'au moins le précurseur basique ou le précurseur acide comprenne de l'aluminium, soit que les deux précurseurs basique et acide comprennent de l'aluminium.

Les précurseurs basiques comprenant de l'aluminium sont l'aluminate de sodium et l'aluminate de potassium. Le précurseur basique préféré est l'aluminate de sodium.

Les précurseurs acides comprenant de l'aluminium sont le sulfate d'aluminium, le chlorure d'aluminium et le nitrate d'aluminium. Le précurseur acide préféré est le sulfate d'aluminium. De préférence, ladite deuxième étape de précipitation opère sous agitation.

De préférence, ladite deuxième étape est réalisée en l'absence d'additif organique.

Les précurseurs acide et basique, qu'ils contiennent de l'aluminium ou pas, sont mélangées, de préférence en solution, dans le milieux réactionnel aqueux, dans des proportions telles que le pH de la suspension résultante est compris entre 8,5 et 10,5.

De même que dans l'étape a) de précipitation, c'est le débit relatif des précurseurs acide et basique qu'ils contiennent de l'aluminium ou pas, qui est choisi de manière à obtenir un pH du milieu réactionnel compris entre 8,5 et 10,5.

Dans le cas préféré où les précurseurs basique et acide sont respectivement l'aluminate de sodium et le sulfate d'aluminium, le ratio massique dudit précurseur basique sur ledit précurseur acide est avantageusement compris entre 1,6 et 2,05.

Pour les autres précurseurs basique et acide, qu'ils contiennent de l'aluminium ou pas, les ratio massique base/acide sont établis par une courbe de neutralisation de la base par l'acide. Une telle courbe est obtenue aisément par l'homme du métier.

De préférence, ladite deuxième étape de précipitation est réalisée à un pH compris entre 8,5 et 10 et de manière préférée entre 8,7 et 9,9.

Les précurseurs acide et basique sont également mélangés dans des quantités permettant d'obtenir une suspension contenant la quantité désirée d'alumine, en fonction de la concentration finale en alumine à atteindre. En particulier, ladite deuxième étape de précipitation permet l'obtention de 10 à 55% poids d'alumine en équivalent Al₂O₃ par rapport à la quantité totale d'alumine formée à l'issue des deux étapes de précipitation et de préférence à l'issue de l'étape a').

De même que dans l'étape a) de précipitation, c'est le débit du ou des précurseurs acide et basique contenant de l'aluminium qui est réglé de manière à obtenir un taux d'avancement de la deuxième étape compris entre 10 et 55%, le taux d'avancement étant défini comme étant la proportion d'alumine formée lors de ladite deuxième étape de précipitation par rapport à la quantité totale d'alumine formée à l'issue des deux étapes de précipitation du procédé selon l'invention et de préférence à l'issue de l'étape a').

De préférence, le taux d'avancement de ladite deuxième étape de précipitation a) est compris entre 15 à 55%.

Ainsi, en fonction de la concentration en alumine visée à l'issue de la ou des étapes de précipitation, de préférence comprise entre 20 et 100 g/l, les quantités d'aluminium devant être apportées par les précurseurs acide et/ou basique sont calculées et le débit des précurseurs est réglé en fonction de la concentration desdits précurseurs en aluminium ajoutés, de la quantité d'eau ajoutée dans le milieu réactionnel et du taux d'avancement requis pour chacune des étapes de précipitation.

De même que dans l'étape a) de précipitation, les débit du ou des précurseurs acide et/ou basique contenant de l'aluminium dépendant de la dimension du réacteur utilisé et ainsi de la quantité d'eau ajoutée dans le milieu réactionnel.

A titre d'exemple, si on travaille dans un réacteur de 3 l et que l'on vise 1l de suspension d'alumine de concentration finale en Al₂O₃ de 50 g/l, le taux d'avancement ciblé est de 50% en équivalent Al₂O₃ pour la première étape de précipitation. Ainsi, 50% de l'alumine totale doit être apportée lors de l'étape a) de précipitation. Les précurseurs d'alumines sont l'aluminate de sodium à une concentration de 155 g/l en Al₂O₃ et le sulfate d'aluminium à une concentration de 102 g/l en Al₂O₃ Le pH de précipitation de la première étape est fixée à 9,5 et la deuxième à 9. La quantité d'eau ajoutée dans le réacteur est de 622 ml.

Pour la première étape a) de précipitation opérant à 30°C et pendant 8 minutes, le débit de sulfate d'aluminium doit être de 10,5 ml/min et le débit d'aluminate de sodium est de 13,2 ml/min. Le ratio massique d'aluminate de sodium sur sulfate d'aluminium est donc de 1,91.

Pour la deuxième étape de précipitation, opérant à 70°C, pendant 30 minutes, le débit de sulfate d'aluminium doit être de 2,9 ml/min et le débit d'aluminate de sodium est de 3,5 ml/min. Le ratio massique d'aluminate de sodium sur sulfate d'aluminium est donc de 1,84.

De préférence, la deuxième étape de précipitation est réalisée à une température compris entre 40 et 80 °C, de manière préférée entre 45 et 70°C et de manière très préférée entre 50 et 70°C.

De préférence, la deuxième étape de précipitation est réalisée pendant une durée comprise entre 5 et 45 minutes, et de manière préférée de 7 à 40 minutes.

La deuxième étape de précipitation permet généralement l'obtention d'une suspension d'alumine ayant une concentration en Al₂O₃ comprise entre 20 et 100 g/l, de préférence entre 20 et 80 g/l, de manière préférée entre 20 et 50 g/l.

Conformément à l'invention, ledit procédé de préparation comprend également une deuxième étape de chauffage de la suspension obtenue à l'issue de ladite deuxième étape de précipitation à une température comprise entre 50 et 95°C et de préférence entre 60 et 90°C.

De préférence, ladite deuxième étape de chauffage est mise en oeuvre pendant une durée comprise entre 7 et 45 minutes.

Ladite deuxième étape de chauffage est avantageusement mise en oeuvre selon toutes les méthodes de chauffage connues de l'homme du métier.

Ladite deuxième étape de chauffage permet d'augmenter la température du milieu réactionnel avant de soumettre la suspension obtenue à l'étape b) de traitement thermique.

### Etape b) de traitement thermique

Conformément à l'invention, ledit procédé de préparation comprend une étape b) de traitement thermique de la suspension obtenue à l'issue de l'étape a') de précipitation, ladite étape de traitement thermique opérant à une température comprise entre 50 et 200°C pendant une durée comprise entre 30 minutes et 5 heures, pour obtenir le gel d'alumine.

De préférence, ladite étape b) de traitement thermique est une étape de mûrissement.

De préférence, ladite étape b) de traitement thermique opère à une température comprise entre 65 et 150°C, de préférence entre 65 et 130°C, de manière préférée entre 70 et 110°C, de manière très préférée entre 70 et 95°C.

De préférence, ladite étape b) de traitement thermique est mise en œuvre pendant une durée comprise entre 40 minutes et 5 heures, de préférence entre 40 minutes et 3 heures et de manière préférée entre 45 minutes et 2 heures.

### Etape c) de filtration

Conformément à l'invention, le procédé de préparation du gel d'alumine selon l'invention comprend également une étape c) de filtration de la suspension obtenue à l'issue de l'étape b) de traitement thermique, suivie d'au moins une étape de lavage du gel obtenu. Ladite étape de filtration est avantageusement réalisée selon les méthodes connues de L'homme du métier.

La filtrabilité de la suspension obtenue à l'issue de l'étape a) de précipitation ou des deux étapes de précipitation est améliorée par la présence de ladite étape b) de traitement thermique finale de la suspension obtenue, ladite étape de traitement thermique favorisant la productivité du procédé selon l'invention, ainsi qu'une extrapolation du procédé au niveau industriel.

Ladite étape de filtration est avantageusement suivie d'au moins une étape de lavage à l'eau et de préférence d'une à trois étapes de lavage, avec une quantité d'eau égale à la quantité de précipité filtré.

Le procédé de préparation selon la présente invention permet donc l'obtention du gel d'alumine présentant un indice de dispersibilité supérieur à 70% et une taille de cristallite comprise entre 2 et 35 nm.

La présente invention concerne également le gel d'alumine susceptible d'être obtenu par le procédé de préparation selon l'invention.

L'invention est illustrée par les exemples suivants qui ne présentent, en aucun cas, un caractère limitatif.

### Exemples:

### Exemple 1 : (comparatif)

Une poudre commerciale d'un gel d'alumine Pural SB3 est préparée selon une voie sol-gel par hydrolyse-polycondensation d'un alcoxyde d'aluminium.

Les caractéristiques de du gel de boehmite Pural SB3 sont résumées dans le tableau 1.

**Tableau 1 : caractéristique de la Pural SB3.**

| | Gel d'alumine commercial |
|---|---|
| Indice de dispersibilité | 98 |
| Taille (020) (nm) | 3,1 |
| Taille (120) (nm) | 4,7 |
| Sodium Na (ppm) | < limite de détection |
| Soufre S (ppm) | < limite de détection |

La teneur en soufre est mesurée par la méthode de fluorescence X, et la teneur en sodium est mesurée par ICP ou spectrométrie à plasma à couplage inductif sont inférieures à la limite de détection de ces méthodes de mesure.

### Exemple 2 (comparatif) :

On réalise la synthèse d'un gel d'alumine selon un procédé de préparation non conforme à l'invention en ce que l'étape de précipitation est réalisée à haute température, c'est-à-dire à une température de 60°C. L'agitation est de 350 rpm tout au long de la synthèse.

La synthèse est réalisée dans un réacteur de 5 l en 2 étapes, une étape de précipitation et une étape de murissement de la suspension obtenue.

La concentration finale en alumine visée est de 50 g/l.

Une étape de précipitation de sulfate d'aluminium Al₂(SO₄) et d'aluminate de sodium NaAlOO est réalisée à 60°C et pH=10,2 pendant une durée de 20 minutes. Les concentrations des précurseurs d'aluminium utilisées sont les suivantes : Al₂(SO₄)= à 102 g/L en Al₂O₃ et NaAlOO à 155 g/l en Al₂O₃.

Une solution de sulfate d'aluminium Al₂(SO₄) est ajoutée en continu pendant 30 minutes à un débit de 25,9 ml/min à une solution d'aluminate de sodium NaAlOO selon un ratio massique base/acide = 2,0 de manière à ajuster le pH à une valeur de 10,2. La totalité des précurseurs est mise en contact à une température de 60°C.

Une suspension contenant un précipité d'alumine est obtenue.

La concentration finale en alumine visée étant de 50 g/l, le débit des précurseurs sulfate d'aluminium Al₂(SO₄) et aluminate de sodium NaAlOO contenant de l'aluminium introduit dans la première étape de précipitation sont respectivement de 25,9 ml/min et de 34,1 ml/min.

Ces débits de précurseurs acide et basique contenant de l'aluminium permettent d'obtenir à l'issue de la première étape de précipitation un taux d'avancement de 100%.

La suspension obtenue est ensuite soumise à une montée en température de 60 à 90°C.

La suspension subit ensuite une étape de mûrissement dans laquelle elle est maintenue à 90°C pendant 60 minutes.

La suspension obtenue est ensuite filtrée par déplacement d'eau sur un outil type Buchner fritté et le gel d'alumine obtenu est lavé 3 fois avec 3,5L d'eau distillée à 70°C. Le temps de filtration et de lavage est de 3h.

Les caractéristiques du gel d'alumine ainsi obtenu sont résumés dans le tableau 2.

**Tableau 2 : caractéristiques du gel d'alumine obtenu selon l'exemple 2.**

| | Exemple 2 |
|---|---|
| Indice de dispersibilité Ta (10% (%)) | 0 |
| Taille (020) (nm) | 2,9 |
| Taille (120) (nm) | 3,4 |
| Sodium Na (%) | 0,0068 |
| Soufre S (%) | 0,042 |
| Temps de filtration | 3 h |

L'exemple 2 non-conforme à l'invention met en évidence l'importance d'opérer lors de l'étape de précipitation à basse température et en particulier lors de la première étape de précipitation. Ainsi, une étape de précipitation réalisée à une température de 70°C, en dehors des gammes revendiquées, ne permet pas l'obtention d'un gel dispersible. Au contraire, la dispersion de 10% de gel d'alumine ainsi obtenu dans une suspension d'eau contenant également 10% d'acide nitrique par rapport à la masse de gel d'alumine, puis la centrifugation de la suspension à 3600G pendant 10 min mène à 100% de sédiments.

### Exemple 3 (comparatif) :

On réalise la synthèse d'un gel d'alumine selon un procédé de préparation non-conforme en ce que le procédé de préparation du gel selon l'exemple 3 ne comprend pas d'étape de traitement thermique et en ce que la première étape de précipitation a) ne produit pas une quantité d'alumine supérieure à 40% par rapport à la quantité totale d'alumine formée à l'issue de la deuxième étape de précipitation. L'exemple 3 est réalisé selon le procédé de préparation décrit dans le brevet US 7 790 562.

La synthèse est réalisée dans un réacteur de 7 l et une suspension finale de 5 l en deux étapes de précipitation. La quantité d'eau ajoutée dans le réacteur est de 3868 ml.

La concentration finale en alumine visée est de 30g/l.

Une première étape de co-précipitation de sulfate d'aluminium Al₂(SO₄) et d'aluminate de sodium NaAlOO est réalisée à 30°C et pH=9,3 pendant une durée de 8 minutes. Les concentrations des précurseurs d'aluminium utilisées sont les suivantes : Al₂(SO₄)= à 102g/l en Al₂O₃ et NaAlOO à 155g/l en Al₂O₃. L'agitation est de 350 rpm tout au long de la synthèse.

Une solution de sulfate d'aluminium Al₂(SO₄) est ajoutée en continu pendant 8 minutes à un débit de 19,6 ml/min à une solution d'aluminate de sodium NaAlOO selon un ratio massique base/acide = 1,80 de manière à ajuster le pH à une valeur de 9,3. La température du milieu réactionnel est maintenu à 30°C.

Une suspension contenant un précipité d'alumine est obtenue.

La concentration finale en alumine visée étant de 30g/l, le débit des précurseurs sulfate d'aluminium Al₂(SO₄) et aluminate de sodium NaAlOO contenant de l'aluminium introduit dans la première étape de précipitation sont respectivement de 19,6 ml/min et de 23,3 ml/min.

Ces débits de précurseurs acide et basique contenant de l'aluminium permettent d'obtenir à l'issue de la première étape de précipitation un taux d'avancement de 30%.

La suspension obtenue est ensuite soumise à une montée en température de 30 à 57°C.

Une deuxième étape de co-précipitation de la suspension obtenue est ensuite réalisée par ajout de sulfate d'aluminium Al₂(SO₄) à une concentration de 102 g/l en Al₂O₃ et d'aluminate de sodium NaAlOO à une concentration de 155 g/L en Al₂O₃. Une solution de sulfate d'aluminium Al₂(SO₄) est donc ajoutée en continu à la suspension chauffée obtenue à l'issue de la première étape de précipitation pendant 30 minutes à un débit de 12,8 ml/min à une solution d'aluminate de sodium NaAlOO selon un ratio massique base/acide = 1,68 de manière à ajuster le pH à une valeur de 8,7. La température du milieu réactionnel dans la deuxième étape est maintenu à 57°C.

Une suspension contenant un précipité d'alumine est obtenue.

La concentration finale en alumine visée étant de 30g/l, le débit des précurseurs sulfate d'aluminium Al₂(SO₄) et aluminate de sodium NaAlOO contenant de l'aluminium introduit dans la deuxième étape de précipitations sont respectivement de 12,8 ml/min et 14,1 ml/min. Ces débits de précurseurs acide et basique contenant de l'aluminium permettent d'obtenir à l'issue de la deuxième étape de précipitation un taux d'avancement de 70%.

La suspension ainsi obtenue ne subit pas d'étape de mûrissement.

La suspension obtenue est ensuite filtrée par déplacement d'eau sur un outil type Buchner fritté et le gel d'alumine obtenu est lavé 3 fois avec 5 l d'eau distillée à 70°C. Le temps de filtration et de lavage est de 4 h.

Les caractéristiques du gel d'alumine ainsi obtenu sont résumés dans le tableau 3.

**Tableau 3 : caractéristiques du gel d'alumine obtenu selon l'exemple 3.**

| | Exemple 3 |
|---|---|
| Indice de dispersibilité Ta=10% (%) | 60 |
| Taille (020) (nm) | 2,9 |
| Taille (120) (nm) | 4,1 |
| Sodium Na (ppm) | 0,011 |
| Soufre S (ppm) | 0,057 |
| Temps de filtration | 4 h |

### Exemple 4 (selon l'invention) :

On réalise la synthèse d'un gel d'alumine selon un procédé de préparation conforme à l'invention dans un réacteur de 7l et une suspension finale de 5l en 3 étapes, deux étapes de précipitation suivie d'une étape de mûrissement.

La concentration finale en alumine visée est de 45g/l. La quantité d'eau ajoutée dans le réacteur est de 3267 ml. L'agitation est de 350 rpm tout au long de la synthèse.

Une première étape de co-précipitation dans de l'eau, de sulfate d'aluminium Al₂(SO₄) et d'aluminate de sodium NaAlOO est réalisée à 30°C et pH=9,5 pendant une durée de 8 minutes. Les concentrations des précurseurs d'aluminium utilisées sont les suivantes : Al₂(SO₄)= à 102g/L en Al₂O₃ et NaAlOO à 155g/l en Al₂O₃.

Une solution de sulfate d'aluminium Al₂(SO₄) est ajoutée en continu pendant 8 minutes à un débit de 69,6 ml/min à une solution d'aluminate de sodium NaAlOO à un débit de 84,5 ml/min selon un ratio massique base/acide = 1,84 de manière à ajuster le pH à une valeur de 9,5. La température du milieu réactionnel est maintenu à 30°C.

Une suspension contenant un précipité d'alumine est obtenue.

La concentration finale en alumine visée étant de 45g/l, le débit des précurseurs sulfate d'aluminium Al₂(SO₄) et aluminate de sodium NaAlOO contenant de l'aluminium introduit dans la première étape de précipitations sont respectivement de 69,6 ml/min et 84,5 ml/min. Ces débits de précurseurs acide et basique contenant de l'aluminium permettent d'obtenir à l'issue de la première étape de précipitation un taux d'avancement de 72%.

La suspension obtenue est ensuite soumise à une montée en température de 30 à 68°C.

Une deuxième étape de co-précipitation de la suspension obtenue est ensuite réalisée par ajout de sulfate d'aluminium Al₂(SO₄) à une concentration de 102g/l en Al₂O₃ et d'aluminate de sodium NaAlOO à une concentration de 155g/l en Al₂O₃. Une solution de sulfate d'aluminium Al₂(SO₄) est donc ajoutée en continu à la suspension chauffée obtenue à l'issue de la première étape de précipitation pendant 30 minutes à un débit de 7,2 ml/min à une solution d'aluminate de sodium NaAlOO selon un ratio massique base/acide = 1,86 de manière à ajuster le pH à une valeur de 9. La température du milieu réactionnel dans la deuxième étape est maintenue à 68°C.

Une suspension contenant un précipité d'alumine est obtenue.

La concentration finale en alumine visée étant de 45g/l, le débit des précurseurs sulfate d'aluminium Al₂(SO₄) et aluminate de sodium NaAlOO contenant de l'aluminium introduit dans la deuxième étape de précipitations sont respectivement de 7,2 ml/min et de 8,8 ml/min.

Ces débits de précurseurs acide et basique contenant de l'aluminium permettent d'obtenir à l'issue de la deuxième étape de précipitation un taux d'avancement de 28%.

La suspension obtenue est ensuite soumise à une montée en température de 68 à 90°C.

La suspension subit ensuite une étape de traitement thermique dans laquelle elle est maintenue à 90°C pendant 60 minutes.

La suspension obtenue est ensuite filtrée par déplacement d'eau sur un outil type Buchner fritté et le gel d'alumine obtenu est lavé 3 fois avec 5 d'eau distillée. Le temps de filtration et de lavage est de 3h.

Les caractéristiques du gel d'alumine ainsi obtenu sont résumées dans le tableau 4.

**Tableau 4 : caractéristiques du gel d'alumine obtenu selon l'exemple 4.**

| | Exemple 4 |
|---|---|
| Indice de dispersibilité Ta=10% (%) | 100 |
| Taille (020) (nm) | 2,8 |
| Taille (120) (nm) | 3,5 |
| Sodium Na (%) | 0,074 |
| Soufre S (%) | 0,0364 |
| Temps de filtration | 3 h |

Un gel présentant un indice de dispersibilité de 100% est ainsi obtenu. Par ailleurs, le gel obtenu par le procédé selon l'invention caractérisé par la présence d'une étape de traitement thermique finale permet l'obtention d'un gel d'alumine présentant une bonne filtrabilité c'est-à-dire un temps de filtration compatible avec une extrapolation au niveau industriel du procédé, permettant ainsi une meilleure productivité dudit procédé.

On note également que le gel d'alumine obtenu selon le procédé de préparation selon l'invention est facilement mis en forme.

Le procédé de préparation selon l'invention permettant l'obtention d'un gel 100% dispersible est également moins coûteux que les procédés de préparation d'alumine classique de l'art antérieur tel que par exemple les procédés de préparation de type sol-gel de la Pural SB3 de l'exemple 1.

### Exemple 5 (comparatif) :

L'exemple 5 non conforme à l'invention est réalisée de la même manière et dans les mêmes conditions opératoires que l'exemple 3 à la différence près que la suspension obtenue à l'issue de la deuxième étape de précipitation ne subit pas d'étape de mûrissement.

La suspension obtenue à l'issue de la deuxième étape de précipitation est filtrée par déplacement d'eau sur un outil type Buchner fritté et le gel d'alumine obtenu est lavé 3 fois avec 3,5 l d'eau distillée.

Le temps de filtration et de lavage est de 24 h.

Les caractéristiques du gel d'alumine ainsi obtenu sont résumées dans le tableau 5.

**Tableau 5 : caractéristiques du gel d'alumine obtenu selon l'exemple 5.**

| | Exemple 5 : |
|---|---|
| Indice de dispersibilité Ta=10% (%) | 100 |
| Taille (020) (nm) | 2,8 |
| Taille (120) (nm) | 3,5 |
| Sodium Na (%) | 0,442 |
| Soufre S (%) | 0,0284 |
| Temps de filtration | 24h |

## Revendications

1. Procédé de préparation d'un gel d'alumine ayant un indice de dispersibilité supérieur à 70%, l'indice de dispersibilité étant défini comme le pourcentage en poids de gel d'alumine peptisée que l'on peut disperser par centrifugation dans un tube en polypropylène à 3600G pendant 10 min, la dispersibilité étant mesurée en dispersant 10% de boehmite ou gel d'alumine dans une suspension d'eau contenant également 10% d'acide nitrique par rapport à la masse de boehmite, puis on centrifuge la suspension à 3600G rpm pendant 10 min, les sédiments recueillis sont séchés à 100°C une nuit, puis pesés, on obtient l'indice de dispersibilité, noté ID par le calcul suivant : ID(%)=100%-masse de sédiments séchés(%), une taille de cristallite comprise entre 1 à 35 nm, ainsi qu'une teneur en soufre comprise entre 0,001% et 2% poids et une teneur en sodium comprise entre 0,001% et 2 % poids, les pourcentages poids étant exprimés par rapport à la masse totale de gel d'alumine,, ledit procédé comprenant au moins les étapes suivantes :
a) au moins une première étape de précipitation d'alumine, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de ladite première étape compris entre 45 et 90%, le taux d'avancement étant défini comme étant la proportion d'alumine formée en équivalent Al₂O₃ lors de ladite première étape de précipitation par rapport à la quantité totale d'alumine formée à l'issue de la ou les étapes de précipitation, ladite première étape de précipitation opérant à une température comprise entre 10 et 50°C, et pendant une durée comprise entre 2 minutes et 30 minutes, une étape de chauffage de la suspension obtenue à l'issue de l'étape a) de précipitation est mise en oeuvre entre les deux étapes de précipitation a) et a'), ladite étape de chauffage opérant à une température comprise entre 20 et 90°C et pendant une durée comprise entre 7 et 45 minutes,
a') une deuxième étape de précipitation a') de la suspension obtenue à l'issue de l'étape de chauffage, opérée par ajout dans ladite suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 10 et 55 %, ledit taux d'avancement de la deuxième étape étant défini comme étant la proportion d'alumine formée en équivalent Al₂O₃ lors de ladite deuxième étape de précipitation a') par rapport à la quantité totale d'alumine formée à l'issue de l'étape a'), ladite deuxième étape a') opérant à une température comprise entre 40 et 90 °C, et pendant une durée comprise entre 2 minutes et 50 minutes, et une deuxième étape de chauffage de la suspension obtenue à l'issue de ladite deuxième étape de précipitation a') à une température comprise entre 50 et 95°C,
b) une étape de traitement thermique de la suspension obtenue à l'issue de l'étape a'), à une température comprise entre 50 et 200°C pendant une durée comprise entre 30 minutes et 5 heures,
c) une étape de filtration de la suspension obtenue à l'issue de l'étape b) de traitement thermique, suivie d'au moins une étape de lavage du gel obtenu.

2. Procédé de préparation selon la revendication 1 dans lequel le précurseur basique est l'aluminate de sodium.

3. Procédé de préparation selon l'une des revendications 1 ou 2 dans lequel le précurseur acide est le sulfate d'aluminium.

4. Procédé de préparation selon l'une des revendications 2 et 3 dans lequel le ratio massique dudit précurseur basique sur ledit précurseur acide est compris entre 1,6 et 2,05.

5. Procédé de préparation selon l'une des revendications 1 à 4 dans lequel ladite étape a) de précipitation est réalisée à une température comprise entre 20 et 45°C.

6. Procédé de préparation selon l'une des revendications 1 à 5 dans lequel le ratio massique dudit précurseur basique sur ledit précurseur acide dans la deuxième étape de précipitation a') est compris entre 1,6 et 2,05, les précurseurs basique et acide étant respectivement l'aluminate de sodium et le sulfate d'aluminium.

7. Procédé de préparation selon l'une des revendications 1 à 6 dans lequel la deuxième étape de précipitation a') est réalisée à une température compris entre 45 et 70°C.

## Patentansprüche

1. Verfahren zur Herstellung eines Aluminiumoxid-Gels mit einem Dispergierbarkeitsindex von mehr als 70 %, wobei der Dispergierbarkeitsindex als Gewichtsprozentsatz des peptisierten Aluminiumoxid-Gels definiert wird, das durch Zentrifugation in einem Polypropylen-Rohr bei 3600 G während 10 min dispergiert werden kann, wobei die Dispergierbarkeit gemessen wird, indem 10 % Böhmit oder Aluminiumoxid-Gel in einer Suspension von Wasser, die auch 10 % Salpetersäure im Verhältnis zur Masse des Böhmits enthält, dispergiert werden, dann die Suspension bei 3600 G UpM während 10 min zentrifugiert wird, die gewonnenen Sedimente bei 100 °C eine Nacht lang getrocknet werden, dann gewogen werden, der Dispergierbarkeitsindex, der als ID bezeichnet wird, durch die folgende Berechnung: ID (%) = 100 Massen-% getrocknete Sedimente (%), eine Kristallitgröße zwischen 1 und 35 nm sowie ein Schwefelgehalt zwischen 0,001 Gew.-% und 2 Gew.-% und ein Natriumgehalt zwischen 0,001 Gew.-% und 2 Gew.-% erhalten werden, wobei die Gewichtsprozentsätze im Verhältnis zur Gesamtmasse des Aluminiumoxid-Gels ausgedrückt werden, wobei das Verfahren mindestens die folgenden Schritte umfasst:
a) mindestens einen ersten Schritt des Fällens von Aluminiumoxid, in einem wässrigen Reaktionsmedium, mindestens eines basischen Vorläufers, der aus Natriumaluminat, Kaliumaluminat, Ammoniak, Natriumhydroxid und Kaliumhydroxid ausgewählt wird, und mindestens eines sauren Vorläufers, der aus Aluminiumsulfat, Aluminiumchlorid, Aluminiumnitrat, Schwefelsäure, Salzsäure und Salpetersäure ausgewählt wird, wobei mindestens einer der basischen oder sauren Vorläufer Aluminium umfasst, wobei der relative Durchsatz der sauren und basischen Vorläufer derart ausgewählt wird, dass ein pH des Reaktionsmediums zwischen 8,5 und 10,5 erhalten wird, und der Durchsatz des oder der sauren und basischen Vorläufer, die das Aluminium enthalten, derart geregelt wird, dass eine Rate des Fortschreitens des ersten Schritts zwischen 45 und 90 % erhalten wird, wobei die Rate des Fortschreitens als Anteil an gebildetem Aluminiumoxid in Al₂O₃-Äquivalenten bei dem ersten Fällungsschritt im Verhältnis zur Gesamtmenge an gebildetem Aluminiumoxid am Ende des oder der Fällungsschritte definiert wird, wobei der erste Schritt des Fällens bei einer Temperatur zwischen 10 und 50 °C und während einer Dauer zwischen 2 und 30 Minuten betrieben wird, wobei ein Schritt des Erhitzens der Suspension, die am Ende des Fällungsschritts a) erhalten wird, zwischen den beiden Fällungsschritten a) und a') durchgeführt wird, wobei der Erhitzungsschritt bei einer Temperatur zwischen 20 und 90 °C und während einer Dauer zwischen 7 und 45 Minuten betrieben wird,
a') einen zweiten Schritt a') des Fällens der Suspension, die am Ende des Erhitzungsschritts erhalten wird, der betrieben wird durch Zugabe, zu der Suspension, mindestens eines basischen Vorläufers, der aus Natriumaluminat, Kaliumaluminat, Ammoniak, Natriumhydroxid und Kaliumhydroxid ausgewählt wird, und mindestens eines sauren Vorläufers, der aus Aluminiumsulfat, Aluminiumchlorid, Aluminiumnitrat, Schwefelsäure, Salzsäure und Salpetersäure ausgewählt wird, wobei mindestens einer der basischen oder sauren Vorläufer Aluminium umfasst, wobei der relative Durchsatz der sauren und basischen Vorläufer derart ausgewählt wird, dass ein pH des Reaktionsmediums zwischen 8,5 und 10,5 erhalten wird, und der Durchsatz des oder der sauren und basischen Vorläufer, die das Aluminium enthalten, derart geregelt wird, dass eine Rate des Fortschreitens des zweiten Schritts zwischen 10 und 55 % erhalten wird, wobei die Rate des Fortschreitens des zweiten Schritts als Anteil an gebildetem Aluminiumoxid in Al₂O₃-Äquivalenten bei dem zweiten Fällungsschritt a') im Verhältnis zur Gesamtmenge an gebildetem Aluminiumoxid am Ende des Fällungsschritts a') definiert wird, wobei der zweite Schritt a') bei einer Temperatur zwischen 40 und 90 °C und während einer Dauer zwischen 2 und 50 Minuten betrieben wird, und wobei ein zweiter Schritt des Erhitzens der Suspension, die am Ende des zweiten Fällungsschritts a') erhalten wird, eine Temperatur zwischen 50 und 95 °C aufweist,
b) einen Schritt des thermischen Behandelns der Suspension, die in dem Schritt a') erhalten wird, bei einer Temperatur zwischen 50 und 200 °C während einer Dauer zwischen 30 Minuten und 5 Stunden,
c) einen Schritt des Filtrierens der Suspension, die am Ende des Schritts b) des thermischen Behandelns erhalten wird, gefolgt von mindestens einem Schritt des Waschens des erhaltenen Gels.

2. Verfahren zur Herstellung nach Anspruch 1, wobei der basische Vorläufer Natriumaluminat ist.

3. Verfahren zur Herstellung nach einem der Ansprüche 1 oder 2, wobei der saure Vorläufer Aluminiumsulfat ist.

4. Verfahren zur Herstellung nach einem der Ansprüche 2 und 3, wobei das Massenverhältnis des basischen Vorläufers zu dem sauren Vorläufer zwischen 1,6 und 2,05 beträgt.

5. Verfahren zur Herstellung nach einem der Ansprüche 1 bis 4, wobei der Fällungsschritt a) bei einer Temperatur zwischen 20 und 45 °C durchgeführt wird.

6. Verfahren zur Herstellung nach einem der Ansprüche 1 bis 5, wobei das Massenverhältnis des basischen Vorläufers zu dem sauren Vorläufer in dem zweiten Fällungsschritt a') zwischen 1,6 und 2,05 beträgt, wobei der basische und saure Vorläufer jeweils Natriumaluminat und Aluminiumsulfat sind.

7. Verfahren zur Herstellung nach einem der Ansprüche 1 bis 6, wobei der zweite Fällungsschritt a') bei einer Temperatur zwischen 45 und 70 °C durchgeführt wird.

## Claims

1. Method of preparing an alumina gel having a dispersibility index greater than 70%, the dispersibility index being defined as the percentage by weight of peptised alumina gel that can be dispersed by centrifugation in a polypropylene tube at 3600G for 10 minutes, dispersibility being measured by dispersing 10% of boehmite or alumina gel in a suspension of water also containing 10% nitric acid relative to the mass of boehmite. The suspension is then centrifuged at 3600G rpm for 10 minutes, the collected sediments are dried at 100°C overnight then weighed, the dispersibility index, denoted DI, is obtained by the following calculation: DI(%)=100%-mass of dried sediments (%), a crystallite size between 1 and 35 nm, and a sulphur content between 0.001% and 2% by weight, and a sodium content between 0.001% and 2% by weight, the weight percentages being expressed in relation to the total mass of alumina gel, said method comprising at least the following steps:
a) at least a first step of precipitating alumina, in an aqueous reaction medium, of at least one basic precursor selected from sodium aluminate, potassium aluminate, ammonia, sodium hydroxide and potassium hydroxide and of at least one acidic precursor selected from aluminium sulphate, aluminium chloride, aluminium nitrate, sulphuric acid, hydrochloric acid, and nitric acid, in which at least one of the basic or acidic precursors includes aluminium, the relative feed rate of the acidic and basic precursors is chosen so as to obtain a pH of the reaction medium between 8.5 and 10.5 and the feed rate of the acidic and basic precursor(s) containing aluminium is adjusted so as to obtain a progression rate of said first step between 45 and 90%, the progression rate being defined as the proportion of alumina formed in Al₂O₃ equivalent during said first precipitation step relative to the total quantity of alumina formed at the end of the precipitation step(s), said first step taking place at a temperature between 10 and 50°C, and for a duration of between 2 minutes and 30 minutes, a heating step of the suspension obtained at the end of the step a), carried out between the said step a) and the second precipitation step a'), is performed at a temperature between 20 and 90°C for a period between 7 and 45 minutes,
a') a second precipitation step a') of the suspension obtained at the end of the heating step, the said second step being carried out by adding to the said suspension at least one basic precursor selected from sodium aluminate, potassium aluminate, ammonia, sodium hydroxide and potassium hydroxide and at least one acidic precursor selected from aluminium sulphate, aluminium chloride, aluminium nitrate, sulphuric acid, hydrochloric acid, and nitric acid, in which at least one of the basic or acidic precursors contains aluminium, the relative flow rate of the acidic and basic precursors is chosen so as to obtain a pH of the reaction medium between 8.5 and 10.5 and the flow rate of the acidic and basic precursor or precursors containing aluminium is regulated so as to obtain a rate of progress of the second step between 10 and 55%, the rate of progress being defined as the proportion of alumina formed as Al₂O₃ equivalent during the said second precipitation step with respect to the total amount of alumina formed at the end of the step a'), the said step being carried out at a temperature between 40 and 90°C, and for a period between 2 minutes and 50 minutes, a second heating step of the suspension obtained at the end of the said second precipitation step at a temperature between 50 and 95°C,
b) a step of heat treating the suspension obtained at the end of step a'), at a temperature between 50 and 200°C for a duration of between 30 minutes and 5 hours,
c) a step of filtering the suspension obtained at the end of heat treatment step b), followed by at least one step of washing the gel obtained.

2. Preparation method according to Claim 1, in which the basic precursor is sodium aluminate.

3. Preparation method according to any one of Claims 1 or 2, in which the acidic precursor is aluminium sulphate.

4. Preparation method according to any one of Claims 2 and 3, in which the mass ratio of said basic precursor to said acidic precursor is between 1.6 and 2.05.

5. Preparation method according to any one of Claims 1 to 4, in which said precipitation step a) takes place at a temperature between 20 and 45°C.

6. Preparation method according to any one of Claims 1 to 5, in which the mass ratio of said basic precursor to said acidic precursor in the second precipitation step a') is between 1.6 and 2.05, the basic and acidic precursors being respectively sodium aluminate and aluminium sulphate.

7. Preparation method according to any one of Claims 1 to 6, in which the second precipitation step a') takes place at a temperature between 45 and 70°C.
